# EUROPÄISCHE PATENTANMELDUNG

(11) **EP 2 138 806 A1**
(43) Veröffentlichungstag der Anmeldung: **30.12.2009**
(21) Anmeldenummer: 08011647.8
(22) Anmeldetag: 27.06.2008
(51) Int. Cl.: G01D 5/244

(54) **Positionsmessvorrichtung**

(71) Anmelder: SICK STEGMANN GmbH, 78166 Donaueschingen (DE)
(72) Erfinder: Siraky, Josef, 78166 Donaueschingen (DE)
(74) Vertreter: Modrow, Stephanie

(57) **Zusammenfassung**

Eine Positionsmessvorrichtung weist eine erste und eine zweite Maßverkörperung (2.1, 2.2) und eine erste und eine zweite Abtasteinrichtung (1.1, 1.2) auf. Sowohl die erste und die zweite Maßverkörperung (2.1, 2.2) als auch die erste und die zweite Abtasteinrichtung (1.1, 1.2) sind jeweils gleich aber zu einer die Messrichtung einschließenden Ebene gespiegelt ausgebildet. Die erste und die zweite Maßverkörperung (2.1, 2.2) sind in einem festen gegenseitigen Abstand in Nichtmessrichtung angeordnet und ebenso sind die erste und die zweite Abtasteinrichtung (1.1, 1.2) in einem festen gegenseitigen Abstand in Nichtmessrichtung angeordnet. Die von den Abtasteinrichten (1.1, 1.2) generierten Abtastsignale sind von den jeweiligen Abtastabständen (a1 bzw. a2) abhängig, die sich komplementär zueinander ändern. Die von der ersten Abtasteinrichtung (1.1) und die von der zweiten Abtasteinrichtung (1.2) generierten Abtastsignale werden zu einem Ausgangsabtastsignal elektronisch kombiniert, welches unabhängig ist von Relativbewegungen zwischen den Maßverkörperungen (2.1, 2.2) und den Abtasteinrichtungen (1.1, 1.2) in der Nichtmessrichtung auf Grund von mechanischen Toleranzen.

## Beschreibung

Die Erfindung betrifft eine Positionsmessvorrichtung gemäß dem Oberbegriff des Patentanspruchs 1.

Solche Positionsmessvorrichtungen dienen dazu die lineare oder rotatorische Relativposition zwischen zwei Objekten zu messen. Eine Maßverkörperung ist mit einem dieser Objekte und eine Abtasteinrichtung mit dem anderen Objekt verbunden. Entsprechend der Positionsänderung der Objekte sind die Maßverkörperung und die Abtasteinrichtung in Messrichtung relativ zueinander bewegbar. Bei der Abtastung der Maßverkörperung durch die Abtasteinrichtung werden positionsabhängige elektrische Abtastsignale generiert, die einer Folgeelektronik, beispielsweise einer numerischen Steuerung zugeführt werden. Die Qualität der Abtastsignale ist abhängig von dem Abtastabstand zwischen Maßverkörperung und Abtasteinrichtung, d. h. von deren Abstand in der zur Messrichtung senkrechten Nichtmessrichtung. Um optimale Abtastsignale zu erhalten, muss dieser Abtastabstand einen vorgegebenen Wert möglichst genau einhalten. Einerseits darf dieser Abtastabstand nicht zu klein werden, da anderenfalls eine mechanische Berührung zwischen der Maßverkörperung und der Abtasteinrichtung auftreten kann. Überschreitet der Abtastabstand andererseits diesen vorgegebenen Wert, so verschlechtert sich das Abtastsignal zunehmend, so dass dieses Abtastsignal keine zuverlässige Diskriminierung der Teilung der Maßverkörperung mehr ermöglicht und sich die Auflösung der Positionsmessvorrichtung verschlechtert.

Aus diesem Grund ist es z.B. aus der DE 198 36 003 A1 bekannt, den Abtastabstand zwischen der Maßverkörperung und der Abtasteinrichtung mechanisch zu justieren. Aus der EP 1 126 248 B1 ist es zudem bekannt, diese mechanische Justierung automatisch entsprechend den erhaltenen Abtastsignalen zu regeln. Diese mechanischen Justierungen erhöhen den konstruktiven Aufwand der Positionsmessvorrichtung.

Die Erfindung liegt die Aufgabe zu Grunde, eine Positionsmessvorrichtung zu schaffen, die mit geringem konstruktivem Aufwand größere Toleranzen bezüglich des Abtastabstandes zulässt.

Diese Aufgabe wird erfindungsgemäß gelöst durch eine Positionsmessvorrichtung mit den Merkmalen des Patentanspruchs 1.

Vorteilhafte Ausführungen der Erfindung sind in den Unteransprüchen angegeben.

Der wesentliche Gedanke der Erfindung besteht darin, die Anordnung von Maßverkörperung und Abtasteinrichtung in der Weise zu verdoppelt, dass zu einer ersten Maßverkörperung und einer ersten Abtasteinrichtung um eine die Messrichtung einschließende und zu der Nichtmessrichtung senkrechten Ebene gespiegelt eine im übrigen gleiche Anordnung einer zweiten Maßverkörperung und einer zweiten Abtasteinrichtung vorgesehen sind. Die erste und die zweite Maßverkörperung sind in mechanisch fester gegenseitiger Zuordnung angeordnet und ebenso sind die erste und die zweite Abtasteinrichtung in mechanisch fester gegenseitiger Zuordnung angeordnet. Die von den beiden Abtasteinrichtungen erzeugten Abtastsignale werden elektronisch zu einem gesamten Ausgangsabtastsignal kombiniert, vorzugsweise addiert.

Die gespiegelte Anordnung der zwei Maßverkörperungen und der zwei zugeordneten Abtasteinrichtungen hat zur Folge, dass sich der Abtastabstand zwischen der ersten Maßverkörperung und der ersten Abtasteinrichtung komplementär zu dem Abtastabstand zwischen der zweiten Maßverkörperung und der zweiten Abtasteinrichtung ändert. Die Summe des ersten Abtastabstandes zwischen der ersten Maßverkörperung und der ersten Abtasteinrichtung und des zweiten Abtastabstandes zwischen der zweiten Maßverkörperung und der zweiten Abtasteinrichtung bleibt somit konstant, auch wenn sich auf Grund von mechanischen Toleranzen beim Betrieb der Positionsmessvorrichtung die Maßverkörperungen und die Abtasteinrichtungen in der Nichtmessrichtung gegeneinander bewegen. Verschlechtert sich das von der ersten Abtasteinrichtung generierte Abtastsignal, weil sich der erste Abtastabstand vergrößert, so verbessert sich das von der zweiten Abtasteinrichtung generierte Abtastsignal, weil sich komplementär der zweite Abtastabstand verkleinert. Die Kombination der beiden Abtastsignale ergibt somit immer ein ausreichendes gesamtes Ausgangsabtastsignal, welche eine zuverlässige Diskriminierung der Maßteilung der Maßverkörperung ermöglicht. Die Positionsmessvorrichtung kann daher größere mechanische Toleranzen in der Nichtmessrichtung aufweisen und damit kostengünstiger hergestellt werden, ohne dass dadurch die Auflösung und die Zuverlässigkeit beeinträchtigt werden.

Die Maßverkörperung und die Abtasteinrichtung können erfindungsgemäß in allen an sich bekannten Ausführungen ausgebildet sein. Einzelheiten in der Ausbildung der Maßverkörperung und der Abtasteinrichtung sind für die Erfindung nicht wesentlich und brauchen daher nicht im Einzelnen beschrieben zu werden.

Die Maßverkörperung und die Abtasteinrichtung können optisch zusammenwirken, wobei von der Abtasteinrichtung ausgesandtes Licht an einer optischen Struktur der Maßverkörperung moduliert reflektiert wird und von der Abtasteinrichtung empfangen wird. Die Diskriminierung des empfangenen modulierten Lichtes hängt von dem Abtastabstand zwischen der Maßverkörperung und der Abtasteinrichtung ab.

Die Maßverkörperung und die Abtasteinrichtung können kapazitiv zusammenwirken. Leitende Flächen von Maßverkörperung und Abtasteinrichtung wirken dabei entsprechend ihrer jeweiligen Überlappung in Messrichtung als Kondensatoren mit positionsabhängiger Kapazität. Die Kapazität hängt außer der gewünschten Abhängigkeit von der Überlappung in Messrichtung von dem Abtastabstand, d. h. dem Abstand der Kondensatorflächen ab.

Die Maßverkörperung und die Abtasteinrichtung können magnetisch zusammenwirken. Hierbei wirken Magnete der Maßverkörperung auf die Abtasteinrichtung ein, wobei die wirksame Magnetfeldstärke vom Abtastabstand abhängt.

Die Maßverkörperung und die Abtasteinrichtung können induktiv zusammenwirken. Hierbei beeinflussen Material und/oder Oberflächenstrukturen der Maßverkörperung die Induktivität von Spulen der Abtasteinrichtung. Auch hier ist der induktive Einfluss vom Abtastabstand abhängig.

Je nach Aufbau und Anwendung kann die gespiegelte Anordnung der ersten und zweiten Maßverkörperungen und Abtasteinrichtung so gewählt werden, dass die Abtasteinrichtungen in der Nichtmessrichtung zwischen den Maßverkörperungen angeordnet sind oder dass die Maßverkörperungen zwischen den Abtasteinrichtungen angeordnet sind. Wesentlich ist nur, dass die erste Maßverkörperung und die erste Abtasteinrichtung sowie die zweite Maßverkörperung und die zweite Abtasteinrichtung bis auf die gespiegelte Anordnung identisch ausgebildet sind, so dass von den abstandsabhängigen Amplituden abgesehen gleiche Signale von beiden Abtasteinrichtungen generiert werden. Die erste und die zweite Maßverkörperung sind in festem gegenseitigen Abstand an einem ersten Messobjekt angeordnet, während die erste und die zweite Abtasteinrichtung in gegenseitiger fester Anordnung an dem zweiten Messobjekt angeordnet sind.

Im Folgenden wir die Erfindung anhand eines in der Zeichnung schematisch dargestellten Ausführungsbeispiels näher erläutert. Es zeigen
- Fig. 1: den prinzipiellen Aufbau einer Positionsmessvorrichtung nach dem Stand der Technik und
- Fig. 2: entsprechend den prinzipiellen Aufbau einer Positionsmessvorrichtung gemäß der Erfindung.

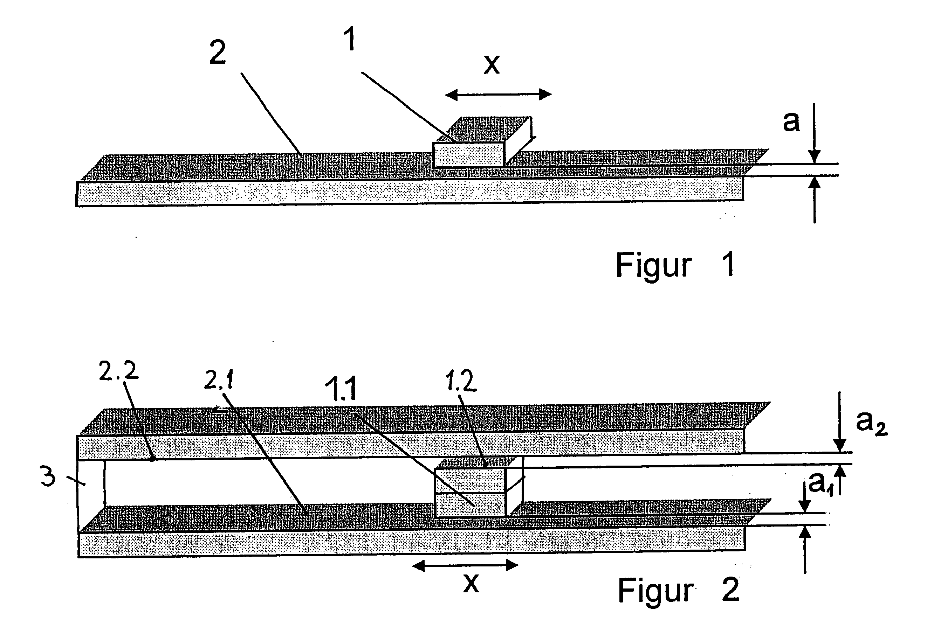

In Figur 1 ist eine Positionsmessvorrichtung nach dem Stand der Technik gezeigt.

Diese Positionsmessvorrichtung weist eine Maßverkörperung 2 auf, die durch eine Abtasteinrichtung 1 abgetastet wird. Die Maßverkörperung 2 und die Abtasteinrichtung 1 sind an gegeneinander bewegbaren Objekten angeordnet, so dass die Maßverkörperung 2 und die Abtasteinrichtung 1 in der in der Zeichnung durch den Pfeil X angedeuteten Messrichtung relativ zueinander bewegbar sind. Die Maßverkörperung 2 und die Abtasteinrichtung 1 sind in an sich bekannter Weise als optische, kapazitive, induktive oder magnetische Messvorrichtung ausgebildet, bei welcher die Abtasteinrichtung 1 von der gegenseitigen Position von Abtasteinrichtung 1 und Maßverkörperung 2 abhängige Abtastsignale erzeugt, welche einer nachgeschalteten Folgeelektronik, z. B. einer numerischen Steuerung zugeführt werden. In der Zeichnung ist die Maßverkörperung 2 linear dargestellt, so dass die Abtasteinrichtung 1 und die Maßverkörperung 2 linear gegeneinander bewegbar sind. Selbstverständlich kann die Positionsmessvorrichtung auch als rotatorische Messvorrichtung ausgebildet sein, bei welcher die Maßverkörperung z. B. auf einer Kreisscheibe angeordnet ist und Abtasteinrichtung 1 und Maßverkörperung 2 koaxial rotatorisch gegeneinander bewegt werden.

Die Abtasteinrichtung 1 tastet die Maßverkörperung 2 berührungslos ab. Dementsprechend weist die Abtasteinrichtung 1 von der Maßverkörperung 2 einen Abtastabstand a in der zur Messrichtung X senkrechten Nichtmessrichtung auf. Entsprechend dem physikalischen Prinzip der Abtastung sind die von der Abtasteinrichtung 1 generierten Abtastsignale von diesem Abtastabstand a abhängig. Bewegen sich die Abtasteinrichtung 1 und die Maßverkörperung 2 in der Messrichtung X gegeneinander, so kann sich auf Grund der mechanischen Toleranzen der Abtastabstand a ändern. Diese Änderung des Abtastabstandes a führt zu einer Änderung der Abtastsignale, wobei insbesondere eine Vergrößerung des Abtastabstandes a zu einer Verschlechterung der Abtastsignale führt. Dieses Verschlechterung der Abtastsignale kann die Diskriminierung der Abtastsignale und damit die Genauigkeit der Positionsmessung und deren Auflösung beeinträchtigen. Dementsprechend ist es nach dem in Figur 1 gezeigten Stand der Technik erforderlich, hohe Anforderungen an die mechanischen Eigenschaften und Lagerungen der Abtasteinrichtung 1 und der Maßverkörperung 2 zu stellen, um bezüglich des Abtastabstandes a möglichst enge Toleranzen einzuhalten.

Dieses Problem wird durch die in Figur 2 gezeigte erfindungsgemäße Positionsmessvorrichtung gelöst.

Soweit die erfindungsgemäße Positionsmessvorrichtung mit dem in Figur 1 gezeigten Stand der Technik übereinstimmt, wird auf die vorangehende Beschreibung Bezug genommen. Insbesondere kann auch die erfindungsgemäße Positionsmessvorrichtung linear oder rotatorisch ausgebildet sein und die Abtastung kann auf optischem, induktivem, kapazitivem oder magnetischem Prinzip beruhen.

Im Gegensatz zu dem Stand der Technik sind erfindungsgemäß eine erste Maßverkörperung 2.1 und eine zweite Maßverkörperung 2.2 vorgesehen. Diese Maßverkörperungen 2.1 und 2.2. weisen in der zur Ebene der Maßverkörperungen und zur Messrichtung X senkrechten Nichtmessrichtung einen Abstand auf. Die Maßverkörperungen 2.1 und 2.2 sind mit diesem Abstand mechanisch fest in Bezug zu einander angeordnet, wie dies in Figur 2 durch die Verbindung 3 schematisch angedeutet ist. Die Maßverkörperungen 2.1 und 2.2 können beispielsweise auf den einander zugewandten Flächen von Trägerelementen angebracht sein, die miteinander verbunden sind oder gemeinsam an einem Messobjekt befestigt sind.

Zwischen den einander zugewandten Maßverkörperungen 2.1 und 2.2 sind eine erste Abtasteinrichtung 1.1 und zweite Abtasteinrichtung 1.2 angeordnet. Die Abtasteinrichtung 1.1 tastet die erste Maßverkörperung 2.1 ab, während die zweite Abtasteinrichtung 1.2 die zweite Maßverkörperung 2.2 abtastet. Die beiden Abtasteinrichtungen 1.1 und 1.2 sind mechanisch fest miteinander verbunden, z. B. auf den beiden den Maßverkörperungen 2.1 bzw. 2.2 zugewandten Flächen eines gemeinsamen Trägerelements angeordnet. Die Maßverkörperungen 2.1 und 2.2 und die jeweils zugeordneten Abtasteinrichtungen 1.1 und 1.2 sind abgesehen von ihrer spiegelsymmetrischen Anordnung identisch ausgebildet. Da die Maßverkörperungen 2.1 und 2.2 fest miteinander verbunden sind und die Abtasteinrichtung 1.1 und 1.2 fest miteinander verbunden sind, bewegen sich die Abtasteinrichtung 1.1 und die Maßverkörperung 2.1 und die Abtasteinrichtung 1.2 und die Maßverkörperung 2.2 in identischer Weise in der Messrichtung X und die Abtasteinrichtung 1.1 und 1.2 erzeugen hierbei identische positionsabhängige Abtastsignale.

Die Abtasteinrichtung 1.1 weist in der zur Messrichtung X und zur Ebene der Maßverkörperung 2.1 senkrechten Nichtmessrichtung einen Abtastabstand a1 von der Maßverkörperung 2.1 auf. Die Abtasteinrichtung 1.2 weist in der Nichtmessrichtung einen Abtastabstand a2 von der Maßverkörperung 2.2 auf. Bei optimaler gegenseitiger Justage der Maßverkörperung 2.1 und 2.2 einerseits und der Abtasteinrichtungen 1.1 und 1.2 andererseits sind die Abtastabstände a1 und a2 gleich. In diesem Falle generieren die Abtasteinrichtung 1.1 und Abtasteinrichtung 1.2 gleiche Abtastsignale, insbesondere auch Abtastsignale gleicher Amplitude. Ändert sich bei der Relativbewegung der Maßverkörperungen 2.1 und 2.2 in Messrichtung X gegenüber den Abtasteinrichtungen 1.1 und 1.2 auf Grund von mechanischen Toleranzen die gegenseitige Lage der Abtasteinrichtungen 1.1 und 1.2 gegenüber den Maßverkörperungen 2.1 und 2.2 in der Nichtmessrichtung, so ändern sich auch die jeweiligen Abtastabistände a1 und a2. Auf Grund der mechanisch festen Zuordnung der Maßverkörperungen 2.1 und 2.2 einerseits und der Abtasteinrichtung 1.1 und 1.2 andererseits ändern sich dabei die Abtastabstände a1 und a2 komplementär zueinander. Vergrößert sich der Abtastabstand a1, so verringert sich entsprechend der Abtastabstand a2 um denselben Betrag und umgekehrt. Vergrößert sich der Abtastabstand a1, so verschlechtert sich auf Grund der Abstandsabhängigkeit der Abtastung das Abtastsignal der ersten Abtasteinrichtung 1.1, während sich auf Grund der Verkleinerung des Abtastabstandes a2 das Abtastsignal der zweiten Abtasteinrichtung 1.2 verbessert und umgekehrt.

Erfindungsgemäß werden nun die Abtastsignale der beiden Abtasteinrichtungen 1.1 und 1.2 elektronisch miteinander kombiniert, insbesondere addiert. Dadurch wird ein gesamtes Ausgangsabtastsignal erhalten, dessen Qualität jeweils durch das Abtastsignal derjenigen Abtasteinrichtung 1.1 bzw. 1.2 bestimmt ist, die aktuelle den kleineren Abtastabstand aufweist. Dadurch wird ein Ausgangsabtastsignal erhalten, welches eine gute Diskriminierung der Positionsmesswerte und eine gute Auflösung der Positionsmessung gewährleistet unabhängig von Relativbewegungen der Abtasteinrichtungen 1.1 und 1.2 gegenüber den Maßverkörperungen 2.1 und 2.2 in der Nichtmessrichtung, d. h. unabhängig von mechanischen Toleranzen in der Ausbildung und Lagerung der Maßverkörperung und der Abtasteinrichtung.

In dem Ausführungsbeispiel der Figur 2 sind die Abtasteinrichtungen 1.1 und 1.2 zwischen den Maßverkörperungen 2.1 und 2.2 angeordnet. Es ist ohne Weiteres ersichtlich, dass die erfindungsgemäße Funktion und Wirkung auch erreicht werden kann, wenn die Abtasteinrichtung 1.1 und 1.2 in der Nichtmessrichtung voneinander beabstandet sind und sich die zugeordneten Maßverkörperungen 2.1 und 2.2 zwischen den Abtasteinrichtungen 1.1 und 1.2 befinden. Eine solche Anordnung ist insbesondere dann von Vorteil, wenn sich die Maßverkörperungen gegenüber ortsfesten Abtasteinrichtungen bewegen, wie dies häufig der Fall ist, insbesondere auch bei rotatorischen Positionsmessvorrichtungen. In diesem Falle können die Maßverkörperungen 2.1 und 2.2 auf einem gemeinsamen Trägerelement angeordnet sein. Die Maßverkörperungen 2.1 und 2.2 können beispielsweise auf den beiden Oberflächen einer rotierenden Trägerscheibe angeordnet sein. Insbesondere ist es möglich, ein Trägerelement mit einer einzigen Maßverkörperung auszubilden, die von beiden Seiten in gleicher Weise durch die Abtasteinrichtungen 1.1 und 1.2 abgetastet werden kann. Eine solche Ausführung ist insbesondere bei induktiven und magnetischen Abtastungen möglich.

## Patentansprüche

1. Positionsmessvorrichtung mit einer Maßverkörperung (2) und einer Abtasteinrichtung (1), wobei die Maßverkörperung (2) und die Abtasteinrichtung (1) in Messrichtung (X) relativ zueinander bewegbar sind und in der zur Messrichtung senkrechten Nichtmessrichtung einen Abtastabstand (a) aufweisen und wobei die Qualität eines von der Abtasteinrichtung (1) generierten Abtastsignals von diesem Abtastabstand (a) abhängig ist,
**dadurch gekennzeichnet, dass** die Maßverkörperung eine erste Maßverkörperung (2.1) und eine zweite Maßverkörperung (2.2) aufweist, dass die Abtasteinrichtung eine erste Abtasteinrichtung (1.1) und zweite Abtasteinrichtung (1.2) aufweist, dass sowohl die erste und die zweite Maßverkörperung (2.1 und 2.2) als auch die erste und die zweite Abtasteinrichtung (1.1 und 1.2) jeweils gleich, aber zu einer die Messrichtung (X) einschließenden und zur Nichtmessrichtung senkrechten Ebene gespiegelt ausgebildet sind, dass die erste und die zweite Maßverkörperung (2.1 und 2.2) in einer festen gegenseitigen Lage in Nichtmessrichtung angeordnet sind, dass die erste und die zweite Abtasteinrichtung (1.1 und 1.2) in einer festen gegenseitigen Lage in Nichtmessrichtung angeordnet sind und dass die jeweils von der ersten Abtasteinrichtung (1.1) und der zweiten Abtasteinrichtung (1.2) generierten Abtastsignale elektronisch zu einem Ausgangsabtastsignal kombiniert werden.

2. Messvorrichtung nach Anspruch 1,
**dadurch gekennzeichnet, dass** die Amplituden der Abtastsignale addiert werden.

3. Positionsmessvorrichtung nach Anspruch 1 oder 2,
**dadurch gekenzeichnet, dass** die erste und die zweite Abtasteinrichtung (1.1 und 1.2) bezüglich der Nichtmessrichtung zwischen der ersten und der zweiten Maßverkörperung (2.1 und 2.2) angeordnet sind.

4. Positionsmessvorrichtung nach Anspruch 1 oder 2,
**dadurch gekennzeichnet, dass** die erste und die zweite Maßverkörperung (2.1 und 2.2) bezüglich der Nichtmessrichtung zwischen der ersten und der zweiten Abtasteinrichtung (1.1 und 1.2) angeordnet sind.

5. Positionsmessvorrichtung nach Anspruch 4,
**dadurch gekennzeichnet, dass** die erste und die zweite Maßverkörperung (2.1 und 2.2) auf einem gemeinsamen Trägerelement angeordnet sind.

6. Positionsmessvorrichtung nach Anspruch 5,
**dadurch gekennzeichnet, dass** dieselbe Maßverkörperung als erste und zweite Maßverkörperung (2.1, 2.2) von den entgegengesetzten Seiten des Trägerelements durch die erste bzw. zweite Abtasteinrichtung (1.1 bzw. 1.2) abgetastet wird.

7. Positionsmessvorrichtung nach einem der vorhergehenden Ansprüche,
**dadurch gekennzeichnet, dass** die Abtasteinrichtung (1) die Maßverkörperung (2) optisch, kapazitiv, induktiv oder magnetisch abtastet.
